Europäisches Patentamt

European Patent Office

Office européen des brevets

(11) Publication number: **0 164 344**
**B1**

(12) **EUROPEAN PATENT SPECIFICATION**

(45) Date of publication of patent specification: **08.03.89**

(21) Application number: **84900433.8**

(22) Date of filing: **12.12.83**

(86) International application number:
**PCT/US83/01960**

(87) International publication number:
**WO 85/02663 20.06.85 Gazette 85/14**

(51) Int. Cl.⁴: **F 16 H 37/06,** **F 16 H 47/00,**
**F 16 H 37/08, F 16 H 11/02**

(54) **DUAL RANGE CONTINUOUSLY VARIABLE TRANSMISSION.**

(43) Date of publication of application:
**18.12.85 Bulletin 85/51**

(45) Publication of the grant of the patent:
**08.03.89 Bulletin 89/10**

(84) Designated Contracting States:
**DE FR GB**

(56) References cited:
**EP-A-0 058 834**
**EP-A-0 063 785**
**GB-A-1 092 611**
**GB-A-1 379 339**
**US-A-4 241 618**
**US-A-4 304 150**
**US-A-4 353 270**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(73) Proprietor: **FORD MOTOR COMPANY LIMITED**
**Eagle Way**
**Brentwood Essex CM13 3BW (GB)**
(84) **GB**

(72) Inventor: **PIERCE, Stanley, Leroy**
**962 Newhaven Ct.**
**Northville, MI 48167 (US)**

(74) Representative: **Ritzkowsky, Harald, Dipl.-Ing.**
**Ford-Werke Aktiengesellschaft Patentabteilung**
**Z/DRP Ottoplatz 2**
**D-5000 Köln 21 (DE)**

Courier Press, Leamington Spa, England.

**Description**

This invention relates to drivelines for automotive vehicles having infinitely variable torque multiplication characteristics with an extended effective torque multiplication range. The features as defined in the first part of claim 1 are known from EP—A—63785.

The invention is adapted to be used in an infinitely variable belt drive of the kind shown, for example, in U.S. Patent No. 3 115 049. The belt drive shown in that patent is used with an internal combustion engine when the driving pulleys are located on the engine crankshaft axis and the output shaft is located on a second axis arranged in parallel relationship with respect to the crankshaft axis. A belt loading servo controls the driving pulleys to cause a clamping force on the belt, which is related to the torque transmitting capacity of the drive. A ratio control servo located on the parallel axis controls the effective pitch diameter of both pulleys. As the speed of the vehicle increases relative to the engine speed, the pitch diameter of the driving pulleys increases and the pitch diameter of the driven pulleys decreases. The effective torque ratio range that can be achieved with a drive of the kind disclosed in this patent is determined by the relative pitch diameters of the pulleys. This is true also of other prior art patents, such as U.S. Patent No. 2 829 533; 3 081 642; 3 017 785 and Reissue Patent No. 31 361.

Some of the prior art patents mentioned here use a forward and reverse gear on the output shaft axis. Reference may be made, for example, to Figure 1 of 2 829 533 and Figure 3 of Reissue Patent No. 31 361 for a teaching of a forward and reverse gear mechanism between the driven pulley and the final drive.

Other examples of an infinitely variable belt drives for an automotive vehicle wherein provision is made for achieving reverse and forward drive shown in U.S. Patent Nos. 4 060 012; 4 317 389; 4 304 150 and 4 353 270.

For a description of commercial embodiment of the Fiat/Van Doorne transmatic transmission employing a Van Doorne steel belt, reference may be made to *Road and Track* magazine for August, 1983, pgs. 78, 79 and 80.

The invention as specified in claim 1 comprises a dual range, continuously variable transmission with an automatic ratio change feature capable of providing an expanded ratio range to achieve maximum fuel economy during operation of the vehicle under road load conditions while maintaining the necessary startup speed ratio for high acceleration from a standing start. Provision is made for making a nonsynchronous, overdrive-to-low range shift. The shift is characterized by relatively close ratios, spaced apart about 25 percent, thereby improving the quality of the shift by reducing harshness due to transient inertia forces.

The invention comprises also a hydrokinetic coupling located between the driving pulleys and the engine to provide smoothness during acceleration. A fluid coupling bypass friction clutch is used after the vehicle achieves a steady state road load condition so that the hydrokinetic efficiency losses inherent in a fluid coupling are eliminated.

Figure 1A is a partial, cross-sectional assembly view of my infinitely variable, dual range transmission showing a torque converter and a driving pulley mechanism.

Figure 1B is a partial, cross-sectional view of the transmission illustrated in Figure 1A including the ratio changing clutches, the torque multiplication gearing and the driving pulley mechanism.

Figure 1C is a partial, cross-sectional view of the transmission illustrated in Figures 1A and 1B showing the differential mechanism situated on the torque output side of the transmission structure.

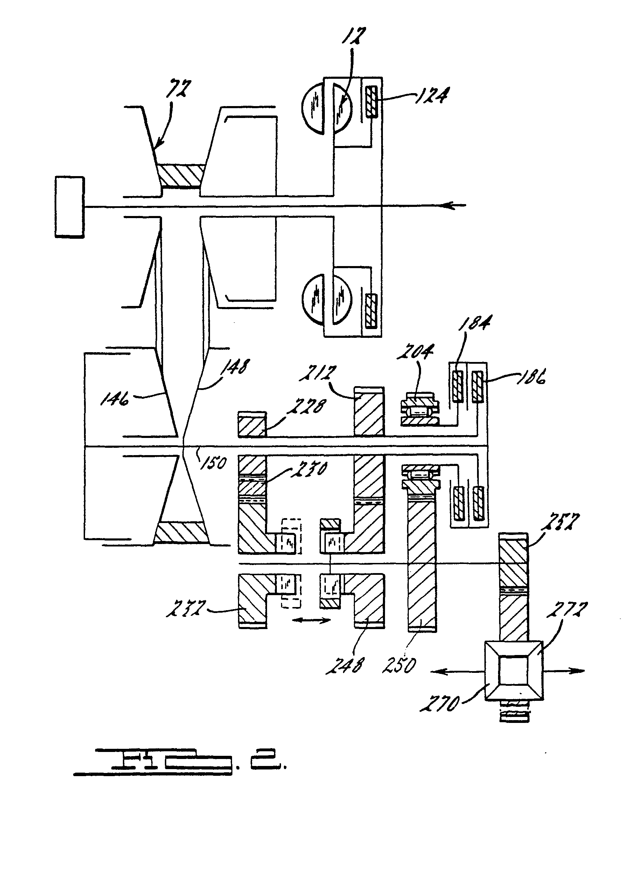

Figure 2 is a schematic representation of an alternate transmission assembly similar to that illustrated in Figures 1A, 1B and 1C.

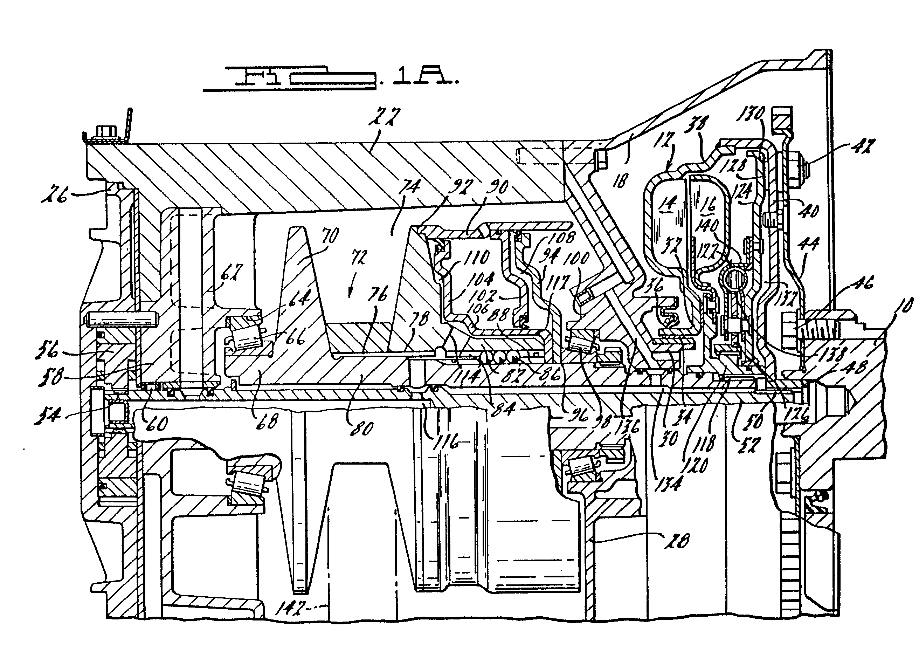

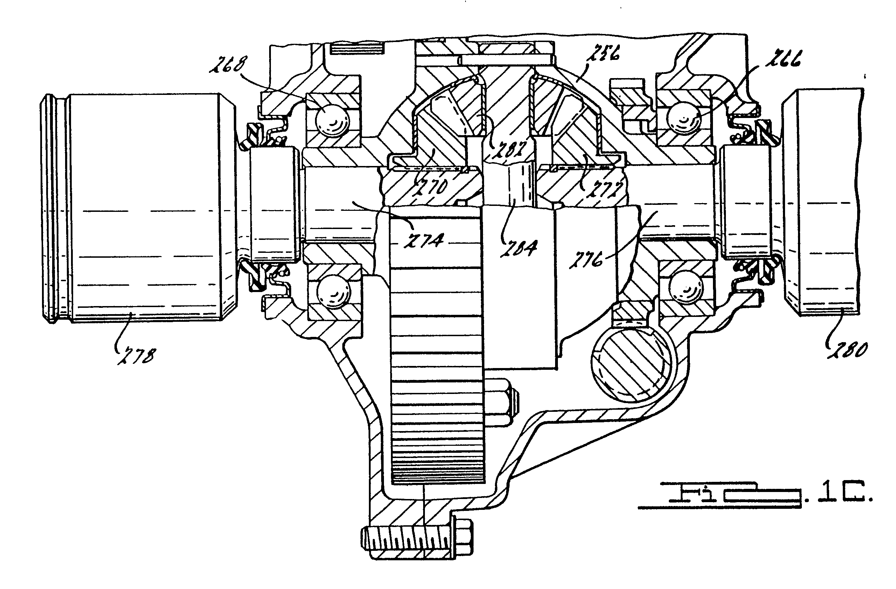

In Figure 1A, numeral 10 designates one end of a crankshaft of an internal combustion engine. Numeral 12 designates a hydrokinetic coupling having a bladed impeller 14 and a bladed turbine 16. Coupling 12 is located within a coupling housing 18 which is secured at the housing margin by bolts, not shown, to the engine block of the internal combustion engine.

A pulley housing 22 is secured at its right end to the housing 18. The left end of the housing 22 receives a closure plate 26.

Housing 18 is provided with an end wall 28 having an impeller support sleeve 30. Hub 32 of the impeller 14 is journalled by bushing 34 on the support sleeve 30. A running fluid seal 36 is provided between end wall 28 and impeller 14.

Impeller housing is designated by reference character 38. It includes a vertical wall 40 between the engine and the coupling. This wall is secured by bolts 42 to drive plate 44, which in turn is connected drivably to the crankshaft 10 as shown at 46. The wall 40 has a hub 48 which is splined at 50 to pump driveshaft 52, the latter extending transversely in coaxial relationship with respect to the impeller and is splined at 54 to pump rotor 56 of a positive displacement pump located in a pump housing formed in the end plate 26. Shaft 52 is journalled in boss 58 by bearing 60. A control valve body can be formed in the housing 22 at the upward portion of the transmission assembly.

The bearing boss 58 forms a part of a transmission casing end wall 62 which is provided with a bearing opening 64 for bearing assembly 66. Hub 68 of cone pulley disc 70 for a pulley or sheave assembly, generally indicated at 72, is journalled by bearing assembly 66. A companion cone disc 74 for the assembly 72 is provided with a disc hub 82 formed with internal drive grooves 84 which receive drive balls 86, the latter being received also in ball grooves 88 formed in shaft 80.

The left margin of cylinder 90 is secured by welding at 92 to the periphery of disc 74. A closure plate 94 is situated within the cylinder 90 and is secured at its inner margin 96 to the shaft 80, the latter being journalled by tapered roller bearings 98 in a bearing opening formed in a support wall 100, which forms a part of the housing 18. Piston plate 102 is situated in the cylinder 90 between the end wall 94 and the piston 104, the latter including a longitudinally extending sleeve 106 that is secured to the shaft 80.

Piston 102 and wall 94 define a working chamber 108 for control pressure, and piston 104 cooperates with the pulley disc 74 to define a working pressure chamber 110. Chamber 108 communicates with chamber 110 through port 112 and through the annular space between piston sleeve 106 and the disc hub 82. Control pressure is supplied to the chambers 108 and 110 through port 114 which communicates with control pressure passage 116 formed in the shaft 52. When the chambers 108 and 110 are pressurized, the pulley discs 70 and 74 move toward each other, which increases the effective pulley pitch-diameter. The balls 86 cause the pulley discs to rotate in unison although they permit axial adjustment of disc 74 relative to disc 70.

The right hand end of shaft 80 is splined at 118 to hub 120 of turbine 16. A torsional damper assembly 122 connects the hub 120 to clutch disc 124. Damper assembly 122 includes a drive plate 126 which is splined to the hub 120.

Clutch disc 124 carries friction material 128 which frictionally engages the radial face 130 of the impeller housing 38. Fluid pressure can be admitted selectively to space 132 between the wall 40 of the housing 38 and the clutch disc 124 through annular passage 134 defined by sleeve shaft 80 and the pump shaft 52. This passage in turn communicates with supply passages 136 formed in the housing 18.

The clutch disc 124 is connected to plate 126 through damper springs 138 which are situated between damper plates 140 joined to the plate 126 and the disc 126.

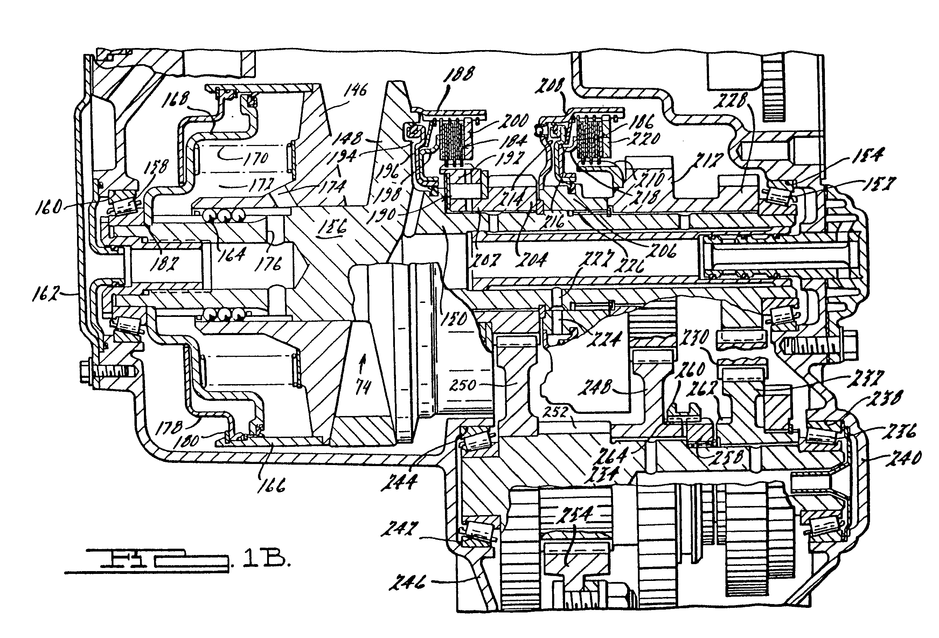

As seen in Figure 1A, a flexible steel belt as drive chain 142 is located in the V-shaped pulley groove defined by pulley discs 70 and 74. Steel belt 142 has side friction surfaces formed on an angle to match the angle of the surfaces of the groove defined by the pulley discs. Belt 142 registers also with the pulley groove defined by pulley discs 146 and 148 shown in Figure 1B. These discs, like the discs 70 and 74, define a V-groove that receives the belt 142. It also has cone surfaces that match the angle of the side friction surfaces of the chain.

Disc 148 is formed on, or forms a part of, a pulley shaft 150 which is journalled at its right hand end by tapered roller bearings 152 located in a bearing recess 154 in the end wall 28 of housing 18.

The pulley disc 148 includes a hub 156 which is journalled by a tapered roller bearing 158 located in bearing opening 160 formed in the casing end wall 62 of the housing 22. A cover plate 162 covers a bearing opening. Disc 146 is supported on the hub 156. It includes internal ball grooves that register with external ball grooves formed in the hub 156. A driving connection is established between the sheave 146 and the hub 156 by balls 164 located in the registering grooves.

Discs 146 carries at its outer margin a cylinder 166. Piston 168 received within the cylinder 166, the latter being movable with the disc 146 with respect to the piston 168. A series of springs 170 is positioned between the disc 146 and the piston 168. A pressure chamber is located on the righthand side of the piston 168 as shown at 172. Fluid pressure is admitted to chamber 172 through port 174 and communicating radial passage 176 formed in the hub 156.

A radial wall 178 is carried by the cylinder 166 and is fixed thereto by snap ring 180. Wall 178 carries a static fluid pressure cavity between it and the piston 168 so that any centrifugal pressure that is developed due to the rotation of the disc 146 in the pressure chamber 172, will be opposed by a counterbalancing pressure developed due to the rotation of the fluid within the space between wall 178 and piston 168.

Piston 168 is adapted to rotate with the hub 156 since it is secured by staking at 182 to the hub 156, but it is held axially fast as the sheave 146 is adjusted.

In Figure 1B a first drive range clutch 184, is located adjacent disc 148, and a second high ratio drive range clutch assembly is shown at 186. Clutch 184 includes a clutch disc carrier 188 and an overrunning coupling 190, the latter having an outer race 192 that is externally splined to internally splined clutch discs of the clutch 184. An annular cylinder 194 is formed in the disc 148, and an annular piston 196 is received in the annular cylinder 194. Piston 196 includes a pressure ring 198 that applies pressure to the clutch discs, the reaction force being taken on a thrust ring 200 carried by the disc carrier 188.

Overrunning coupling 190 includes an inner race 202 that is mounted on shaft 150. The inner race 202 forming integrally low range drive gear 204.

Clutch 186 includes a clutch hub 206 splined to shaft 150, to which is drivably connected to a clutch cylinder 208. The outer margin of the cylinder 208 carries externally splined clutch discs of the clutch 186, and cooperating internally splined clutch discs of the clutch 186 are splined to externally splined member 210, which is connected directly to a forward gear 212 supported on the shaft 150.

Cylinder 208 defines an annular pressure chamber 214 which receives annular piston 216, the latter having a pressure ring 218 that distributes a clutch engaging force to the disc of the clutch 186. The reaction force is accommodated by a thrust ring 220 carried by the cylinder 208.

Pressure is distributed to the annular pressure chamber 214 through radial ports 222 and 224 located in shaft 150 and in hub 206, the latter being splined to shaft 150 at 226.

Reverse drive gear 228 is connected to the gear 212 and together with the gear 212 is supported by the shaft 150. It engages drivably reverse drive pinion 230 which engages in turn reverse gear 232.

Gear 232 is rotatably supported on countershaft 234, one end of which is journalled by a tapered roller bearing 236 mounted in bearing opening 238 of housing portion 240 which forms a part of the previously described housing 18 and end wall 28. The other end of the countershaft 234 is supported by a tapered roller bearing 242 positioned in a bearing pocket 244 in housing portion 246, the latter forming a part of casing end wall 62 previously described.

Forward gear 248 is rotatably supported on the countershaft 234 and meshes with gear 212. Low drive range forward gear 250 is drivably connected to countershaft 234, and it meshes with low range gear as further forward gear 204. Final drive gear 252 drivably engages differential drive gear 254 carried by a differential carrier 256. A spline clutch hub 258 is connected drivably to the countershaft 234, and an internally spline clutch sleeve 260 is slidably positioned on the hub 258. Gear 232 has external clutch teeth 262 located directly adjacent corresponding external clutch teeth on the hub 258, and gear 248 has external clutch teeth 264 located directly adjacent the external teeth of the hub 258 on the left hand side thereof. Sleeve 260 can be shifted from a left hand position to a right hand position, and when it is in the left hand position, countershaft 234 becomes connected directly to the gear 248. When the clutch sleeve 260 is in the right hand position, countershaft 234 becomes directly connected to gear 232.

Carrier 256 is end supported by a pair of bearings 266 and 268. Carrier 256 contains a pair of side gears 270 and 272 which are connected drivably to output shafts 274 and 276 respectively. Shaft 274 is connected to one end of a half axle shaft not shown through a universal joint 278. Similarly, shaft 276 is connected to one end of a companion axle half shaft through a universal joint 280. Pinions, one of which is shown at 282, are mounted on pinion shaft 284; and they engage side gears 270 and 272. Pinion shaft 284 is fixed to the carrier 256 during operation of the transmission structure. Torque is distributed to the driving sleeve assembly 72 through the fluid coupling 12. Ratio changes are achieved by controlling the pressure distribution across the mamber 104. This causes the effective pitch diameter of the belt and pulley arrangement to change. Load on the belt can be controlled by regulating the pressure in pressure chamber 172 of the driven sheave assembly.

During the initial stages of acceleration from a standing start, torque is distributed through the fluid coupling to the input sheave assembly 72; and after a steady state road load condition is achieved, lockup clutch, shown at 124, is applied thereby eliminating the hydrokinetic losses in the coupling. The lockup clutch is applied by decreasing the pressure in chamber 132 behind the disc 124.

When the low range clutch 184 is applied, the output sheave assembly delivers torque to low range gear 204 through the overrunning coupling 190. This drives gear 250, which in turn drives the differential carrier. A drive range change can be achieved by engaging clutch 186 without a synchronous disengagement of the clutch 184. When clutch 186 is engaged, gear 212 is driven, and overrunning coupling 190 freewheels. Clutch 184 may remain applied during operation in this fashion in the high speed drive range. Gear 212 drives gear 248, which in turn drives the gear 252 which drives the differential carrier. This requires the spline sleeve clutch 260 to be shifted in a left hand direction to establish a driving connection between clutch hub 258 and the external teeth 264.

During the initial drive-away condition as the vehicle is accelerating, the fluid coupling is operative; and power is transmitted through the one-way clutch to the low range gear pair 204 and 250. A low-to-high range shift can be scheduled by the control system to take place at the overdriving belt ratios. The range upshift is accomplished by the modulated application of the clutch 186 when the spline clutch sleeve 260 is in its left hand position. The nonsynchronous shift smoothness is due to the close ratios and the application of the single clutch without the need of timed synchronous engagement or disengagement of a companion friction element.

A downshift is accomplished by the modulated release of the high clutch. As the vehicle speed decreases, the downshift would be scheduled at an appropriate speed.

Then the spline coupler would be switched back to the reverse position in preparation for reverse drive. Rocking the vehicle forward and rearward can be accomplished by alternately applying and releasing the two clutches, the low clutch 184 for forward movement and the high clutch 186 for reverse movement.

The dual range feature of this transmission combines two discrete ratio changing features with a continuously variable belt drive function, thus expanding the ratio range and improving fuel economy while at the same time maintaining the necessary performance ratios for maximum acceleration. The coupling bypass clutch (lock-up clutch) shown in part at 124, also may be modulated for smooth engagement. The dual range feature of the transmission provides the transmission designer with the options to expand the underdrive ratio for increased torque capacity and efficiency, to expand the ratio range, or design a combination of both features for underdrive ratio reduction and expanded ratio range.

This improved power transmission mechanism is intended for automobiles using small or medium displacement internal combustion engines.

**Claims**

1. An infinitely variable transmission for motor vehicles comprising driving pulley discs drivably connected to the engine, driven pulley discs arranged in parallel disposition with respect to the axis of the driving pulley discs and a torque transmitting belt connecting them; a first fluid pressure servo for moving one pulley disc of the driving pulley discs with respect to the other, a second fluid pressure servo for moving one pulley disc, of the driven pulley discs with respect to the other; a secondary shaft (150) connected to an output portion of the driven pulley discs and first and second gears on said secondary shaft (150); a countershaft (234) mounted in parallel disposition with respect to said secondary shaft (150) and rotatably supporting thereon a reverse gear (232) of a reverse gear set and a driven forward gear (248) meshing resp. with one of the gears on that secondary shaft (150); a differential assembly mounted on a differential axis in parallel relationship with respect to said countershaft (234), a final drive gearing including a gear (252) fixed on the countershaft (234) and whereby a friction clutch means on said output portion of said driven pulley discs is adapted to establish a driving connection to said secondary shaft (150) and whereby said countershaft (234) having a spline clutch hub (258) affixed thereto and a positive drive spline clutch (260) shiftable axially in either of two directions, in the one direction engaged with said driven forward gear establishes a forward drive and in the other direction engaged with the reverse gear establishes a reverse drive, characterized in that the secondary shaft (150) forming said output portion journalling said first and second and a third gear (212, 228 and 204) whereby the first gear as forward gear (212) and the second gear as reverse gear (228) are connectable to the secondary shaft (150) by a first friction clutch (186) and the third gear as a further forward gear (204) is connectable to the secondary shaft (150) by a second clutch (184) and an overrunning coupling (190) whereby the further forward gear (204) meshes with a forward gear (250) affixed to the countershaft (234).

2. An infinitely variable transmission according to claim 1, characterized in that the second clutch (184) is part of the driven pulley disc (148), said third gear being integrally with the inner race (202) of the overrunning coupling (190) which is mounted on the secondary shaft (150).

3. An infinitely variable transmission according to claims 1 and 2, characterized in that the toruqe input path between said engine and said driving pulley discs includes a fluid coupling (12) having an impeller (14) connected to said engine and a turbine (16) connected via a hub (120) to driving pulley discs shaft (80) and lockup clutch means (124, 128 and 130) selectively engagable to provide a mechanical torque delivery path that bypasses the hydrokinetic torque flow path established by the fluid coupling (12).

**Patentansprüche**

1. Stufenlos verstellbares Getriebe für Motorfahrzeuge bestehend aus einem Antriebsscheibensatz der mit dem Motor antreibbar verbunden ist, einem Abtriebsscheibensatz der parallel mit der Achse des Antriebsscheibensatzes angeordnet ist und einem drehmomentübertragenden Riemen der diese Scheibensätze miteinander verbindet; einem ersten hydraulischen Servomechanismus der eine der Scheiben des Abtriebsscheibensatzes relativ zur anderen bewegt, einem zweiten hydraulischen Servomechanismus der eine der Scheiben des Abtriebsscheibensatzes relativ zur anderen bewegt; eine Sekundärwelle (150) die mit dem Ausgangsteil des Abtriebsscheibensatzes verbunden ist und einem ersten und zweiten Zahnrad auf der Sekundärwelle (150); einer Vorgelegewelle (234) die parallel mit der Sekundärwelle (150) angeordnet ist und auf ihr drehbar ein Rückwärtsgang-Zahnrad (232) eine Rückwärtsgang-Zahnradsatzes und ein Vorwärtsgang-Abtriebszahnrad (248) trägt wobei die letzteren mit je einem der Zahnräder auf der Sekundärwelle (150) im Eingriff sind; einem Differntialgetriebe auf einer Differentialwelle die parallel mit der Vorgelegewelle (234) angeordnet ist, und einer Ausgangsuntersetzung die ein auf der Vorgelegewelle (234) befestigtes Zahnrad (252) einschliesst und wobei eine Reibungskupplung am Ausgangsteil des Abtriebsscheibensatzes bestimmt ist eine Antriebsverbindung mit der Sekundärwelle herzustellen und wobei die Vorgelegewelle (234) mit einer an ihr befestigten keilverzahnten Kupplungsnabe (258) und einer schlupffreien, keilverzahnten, in beiden Richtungen axial verschiebbaren Kupplung (260) versehen ist die in einer Richtung, im Eingriff mit dem Vorwärtsgang-Abtriebszahnrad, einen Vorwärtsgang festlegt und in der anderen Richtung, im Eingriff mit dem Rückwärtsgang-Zahnrad, den Rückwärtsgang festsetzt, dadurch gekennzeichnet, dass die Sekundärwelle (150) den Ausgangsteil bildet und nebst dem ersten und zweiten (212 und 228) ein drittes Zahnrad (204) trägt, wobei das erste Zahnrad als Vorwärtsgang-Zahnrad (212) und das zweite Zahnrad als Rückwärtsgang-Zahnrad (228) mittels einer ersten Reibungskupplung (186) und das dritte Zahnrad als weiteres Vorwärtsgang-Zahnrad (204) mittels einer zweiten Kupplung (184) und einer Freilaufkupplung (190) mit der Sekundärwelle (150) verbunden werden können, wobei das weitere Vorwärtsgang-Zahnrand (204) in ein auf der Vorgelegewelle (234) befestigtes Vorwärtsgang-Zahnrand (250) eingreift.

2. Stufenlos verstellbares Getriebe gemäss Anspruch 1, dadurch gekennzeichnet, dass die zweite Kupplung (184) einen Teil der Abtriebsscheibe (148) bildet, wobei das dritte Zahnrad in einem Stück mit dem auf der Sekundärwelle (150) angeordneten Innenlaufring (202) der Freilaufkupplung (190) ausgebildet ist.

3. Stufenlos verstellbares Getriebe gemäss Anspruch 1 und 2, dadurch gekennzeichnet, dass der Drehmomenteingangsweg zwischen dem Motor und dem Antriebsscheibensatz eine hydraulische Kupplung (12) mit einem, mit dem Motor verbundenen, Pumpenrad (14) und ein über eine Nabe (120) mit der Welle (80) des

Antriebsscheibensatzes verbundenes Turbinenrad (16) sowie eine Ueberbrückungskupplung (124, 128 und 130) aufweist die wahlweise in Eingriff gebracht werden kann um eine mechanische Ueberbrückung des hydrokinetischen Drehmomentweges der hydraulischen Kupplung (12) zu ermöglichen.

## Revendications

1. Transmission à variation continue pour véhicules automobiles, comprenant des joues de poulie menante qui sont accouplées cinématiquement au moteur et des joues de poulie menée disposées sur un axe parallèle à l'axe des joues de la poulie menante, et une courroie de transmission de couple qui accouple ces joues de poulie,

un premier servo-dispositif à pression de fluide servant à déplacer l'une des joues de la poulie menante par rapport à l'autre, un deuxième servo-dispositif à pression de fluide servant à déplacer l'une des joues de la poulie menée par rapport à l'autre;

un arbre secondaire (150), accouplé à une portion de sortie des joues de la poulie menée ainsi que des premier et deuxième pignons prévus sur l'arbre secondaire (150),

un arbre intermédiaire (234) monté parallèlement à cet arbre secondaire (150) et qui porte, monté rotatif sur lui, un pignon de marche arrière (232) appartenant à un couple de pignons de marche arrière et un pignon de marche avant mené (248) qui engrènent respectivement avec des pignons portés par l'arbre secondaire (150);

un différentiel monté sur un axe de différentiel parallélement à cet arbre intermédiaire (234), un couple de pont comprenant un pignon (252) fixé sur l'arbre intermédiaire (234), et où des moyens formant embrayage à friction prévus sur cette portion de sortie des ces joues de la poulie menée sert à établir une liaison d'entraînement avec cet arbre secondaire (150), et où cet arbre intermédiaire (234) sur lequel est fixé un moyeu de crabotage (258) et un baladeur à entraînement desmodromique (260) qui est mobile en translation axiale dans les deux sens, établit, dans un sens, mis en prise avec ce pignon entraîné de marche avant, un entraînement de marche avant et, dans l'autre sens, mis en prise avec le pignon de marche arrière, un entraînement en marche arrière, caractérisé en ce que l'arbre secondaire (250) qui forme cette portion de sortie le premier et le deuxième pignons, ainsi qu'un troisième pignon (212, 228 et 204) libres en rotation, le premier pignon, qui constitue un pignon de marche avant (212) et le deuxième pignon, qui constitue un pignon de marche arrière (228) pouvant être accouplés à l'arbre secondaire (250) par un premier embrayage à friction (186) et le troisième pignon, qui constitue un autre pignon de marche avant (204) pouvant être accouplé à l'arbre secondaire (150) par un deuxième embrayage (184) et un accouplement à roue libre (190), l'autre pignon de marche avant (204) engrenant avec un pignon de marche avant (150) fixé à l'arbre intermédiaire (234).

2. Transmission à variation continue selon la revendication 1, caractérisée en ce que le deuxième embrayage (184) fait partie de la joue (148) de la poulie menée, ce troisième pignon étant solidaire avec la bague intérieure (202) de l'accouplement à roue libre (190) qui est monté sur l'arbre secondaire (150).

3. Transmission à variation continue selon les revendications 1 et 2, caractérisée en ce que le trajet de transmission de couple d'entrée entre le moteur et ces joues de la poulie menante comprennent un coupleur à fluide (12) portant un "impulseur" (14) accouplé à ce moteur et une turbine (16) qui est accouplée, à l'aide d'un moyeu (120), à l'arbre (80) des joues de la poulie menante, et des moyens formant embrayage de blocage (124, 128 et 130) qui peuvent être sélectivement embrayés pour établir un trajet de transmission mécanique du couple qui neutralise le trajet de transmission hydrocinétique du couple qui est établi par le coupleur à fluide (12).

FIG.1A.

EP 0 164 344 B1

FIG. 1B.

EP 0 164 344 B1

FIG.1C.

FIG. 2.